(19) Europäisches Patentamt
European Patent Office
Office européen des brevets

(11) **EP 4 257 361 B1**

(12) **EUROPEAN PATENT SPECIFICATION**

(45) Date of publication and mention
of the grant of the patent:
**12.11.2025 Bulletin 2025/46**

(21) Application number: **23163768.7**

(22) Date of filing: **23.03.2023**

(51) International Patent Classification (IPC):
**B33Y 80/00** $^{(2015.01)}$   **F28F 7/02** $^{(2006.01)}$

(52) Cooperative Patent Classification (CPC):
**B33Y 80/00; F28F 7/02; F28F 21/00**

(54) **A HEAT EXCHANGER WITH COOLING ARCHITECTURE**

WÄRMETAUSCHER MIT KÜHLARCHITEKTUR

ÉCHANGEUR DE CHALEUR À ARCHITECTURE DE REFROIDISSEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.04.2022 US 202217716712**

(43) Date of publication of application:
**11.10.2023 Bulletin 2023/41**

(73) Proprietor: **General Electric Company
Evendale, OH 45215 (US)**

(72) Inventors:
• **OSUSKY, Lana Maria
Schenectady, 12345 (US)**
• **OSGOOD, Daniel Endecott
Schenectady, 12345 (US)**

(74) Representative: **Openshaw & Co.
8 Castle Street
Farnham, Surrey GU9 7HR (GB)**

(56) References cited:
**US-A1- 2018 187 984     US-A1- 2018 306 516
US-A1- 2020 033 070     US-A1- 2020 166 293**

# EP 4 257 361 B1

**Description**

TECHNICAL FIELD

The present subject matter relates generally to a heat exchanger with cooling conduits having a cooling architecture. A cooling architecture having the features of the preamble of claim 1 is known from US 2018/187984.

BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 is a perspective view of an aircraft including at least one heat exchanger according to an aspect of the disclosure herein.
FIG. 2 is a schematic cross-section of the heat exchanger from FIG. 1 including a unit cell.
FIG. 3 is an enlarged view of the unit cell from FIG. 2 including a unit cell border and shading to distinguish layered volumes.
FIG. 4 an enlarged view of the single unit cell 132 of FIG. 3 with the shading and border removed.
FIG. 5 is a perspective side view of consecutive unit cells illustrating a cooling fluid flow through a first set of conduits and a heated fluid flow through a second set of conduits.
FIG. 6 illustrates a furcated path of the heated fluid flow from FIG. 6.
FIG. 7 illustrates a furcated path of the cooling fluid flow from FIG. 6.
FIG. 8 illustrates a method of cooling an engine component with the at least one unit cell according to a unit cell performance factor (UCPF) associated with the at least one unit cell.
FIG. 9 is a flow chart illustrating a method of forming at unit cell.
FIG. 10 is a graph of the UCPF represented along the y-axis and a temperature ratio (TR) represented along the x-axis.

DETAILED DESCRIPTION

Aspects of the disclosure herein are directed to a cooling architecture located within an engine component, and more specifically to a unit cell where a performance of the unit cell is a function of geometry parameters that drive heat transfer and pressure drop. For purposes of illustration, the present disclosure will be described with respect to the cooling architecture defining at least a portion of a heat exchanger that can be located within any suitable part of an aircraft, including but not limited to the engine, avionics systems, or any aircraft system requiring the transfer of heat from one location to another. It will be understood, however, that aspects of the disclosure herein are not so limited and may have general applicability in non-aircraft applications, such as other mobile applications and non-mobile industrial, commercial, and residential applications.

Reference will now be made in detail to the cooling architecture, and in particular the unit cell defining at least a portion of the heat exchanger, one or more examples of which are illustrated in the accompanying drawings. The detailed description uses numerical and letter designations to refer to features in the drawings.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid, or multi-phase. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

"Substrate" as used herein refers to any wall of an engine component.

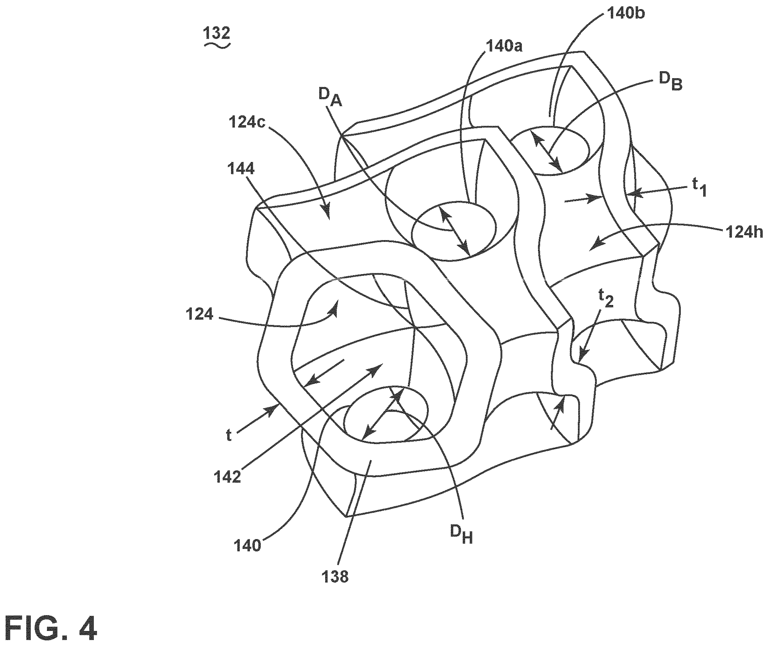

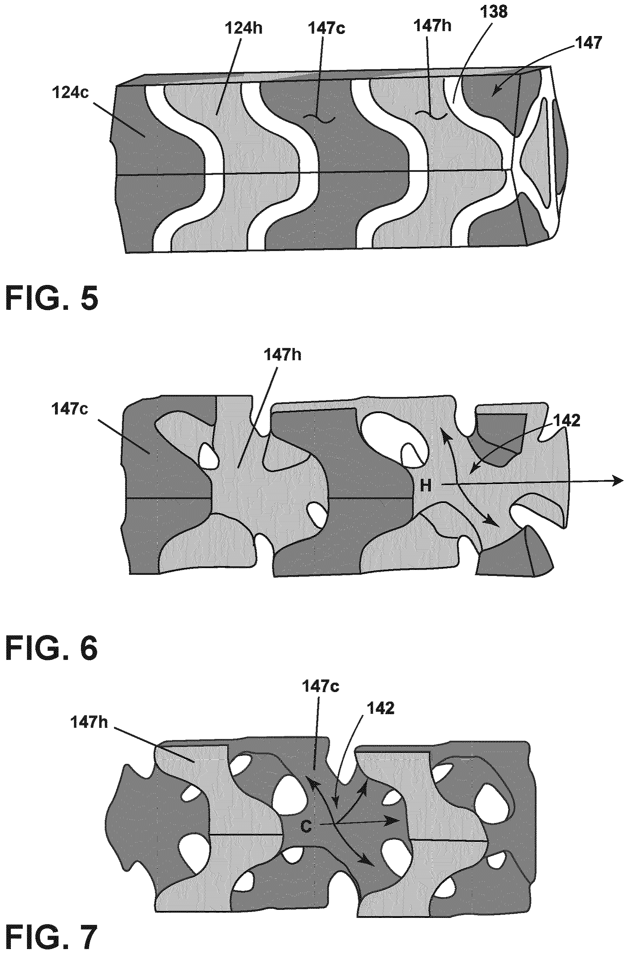

"Unit Cell" as used herein is a block of conduits connected by openings and formed from walls. Each unit cell is defined by a geometry of both a thickness (t) of the walls and a hydraulic diameter ($D_H$) of the openings within the unit cell. FIG. 4 and FIG. 5 are both representative illustrations of a unit cell.

"Thickness" (t) as used herein is in reference to a thickness of the walls defining the unit cell.

"Diameter" ($D_H$) as used herein is in reference to a hydraulic diameter of the openings within the unit cell. Hydraulic diameter is a commonly used term when handling flow in non-circular tubes and channels. When the cross-section is uniform along the tube or channel length, it is defined as $D_H = \dfrac{4a}{p}$ where "a" is the cross-sectional area of the flow and "p" is the wetted perimeter of the cross-section.

"High" and "Low" as used herein are descriptors with regards to the performance indicator quantities described herein.

"Pressure drop" across an obstacle refers to the change in fluid pressure that occurs when the fluid passes through the obstacle. A pressure drop means the fluid's static pressure immediately upstream of the obstacle minus the fluid's static pressure immediately downstream of the obstacle over the fluid's static pressure immediately upstream of the obstacle, and is expressed as a percentage.

"Heat transfer" as used herein is an amount of energy in the form of heat that moves between at least two mediums.

"Solid volume fraction" as used herein is the ratio of solid material volume to the combined total volume of the solid and fluid domains. The solid volume fraction for the unit cell increases with increasing wall thickness and decreasing hydraulic diameter.

"Average flow area" as used herein is a cross-sectional area through which a fluid flows within the unit cell. The average flow area increases with increasing hydraulic diameter. A higher average flow area equates with a lower pressure drop when compared to smaller hydraulic diameters, but at the expense of the amount of heat transfer that can occur in the heat exchanger.

"Fluid Temperature" ($T_f$) as used herein is in reference to the maximum average operating temperature for the fluid flowing through the heat exchanger described herein.

"Material Temperature" ($T_m$) as used herein is in reference to the ultimate tensile strength of the material, which will decrease as temperature increases. The maximum value for the temperature limit is the temperature at which the material reaches a degradation in properties that will prevent the component from meeting its life requirements. Material temperature as used herein is the temperature at which the material's ultimate tensile strength is reduced from its maximum value by 90%. The material temperature value can be determined utilizing ultimate tensile strength curves or it can be determined from testing.

"UCPF" as used herein is in reference to a unit cell performance factor. The UCPF represents a combined impact of heat transfer, pressure drop, solid volume fraction and average flow area. A high heat transfer and/or low pressure drop will contribute to a higher UCPF value, while a low heat transfer and/or high pressure drop will contribute to a lower UCPF value. An optimal range exists where the solid volume fraction is high enough to represent a high number of unit cells and thus heat transfer area within a given volume, but not so high that excessively small unit cells create high pressure drop. The UCPF, by combining these effects, enables an assessment of trade-off impacts when sizing a unit cell heat exchanger for a given set of operating conditions and requirements.

During operation of the gas turbine engine various systems may generate a relatively large amount of heat. For example, a substantial amount of heat may be generated during operation of the thrust generating systems, lubrication systems, electric motors and/or generators, hydraulic systems or other systems. Accordingly, a cooling structure within the engine components located in the various systems would be advantageous in the art.

The unit cell for the heat exchanger can be modified and customized for various operating conditions of an aircraft, including start-up, steady-state, and maximum load. The objective for optimizing a heat exchanger can generally be stated as satisfying a minimum heat transfer capability from a relatively warmer fluid to a relatively cooler fluid for an acceptable amount of pressure drop across the heat exchanger. Key factors to consider include the available volume and associated geometrical constraints for the unit cell, the maximum pressure that the unit cell walls must withstand, and the operational limits associated with the system or component where the heat exchanger is provided.

The inventors' practice has proceeded in the manner of designing a heat exchanger, by way of non-limiting example a heat exchanger located in an aircraft cooling system. The heat exchanger is formed from a collection of unit cells. The design of the unit cell is optimized by the unit cell performance factor (UCPF) described herein, which in turn optimizes the performance of the heat exchanger within the aircraft system.

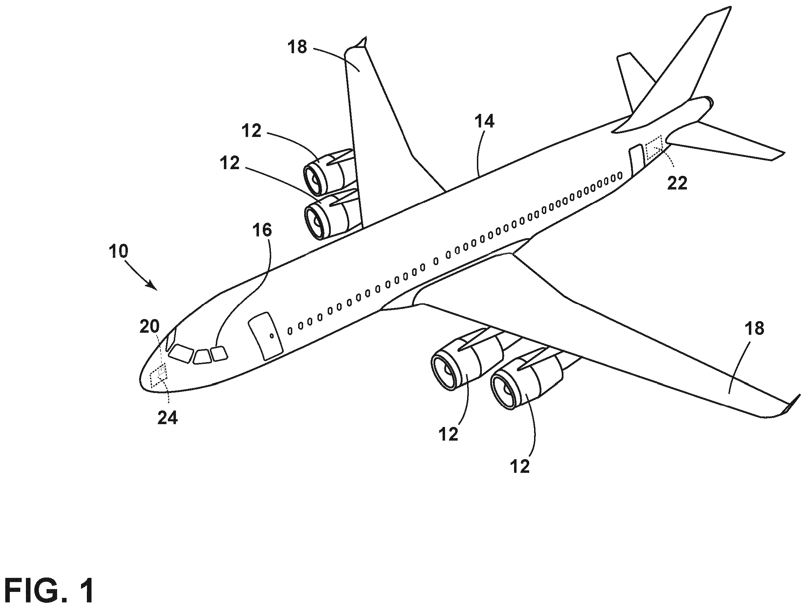

FIG. 1 is a perspective view of an aircraft 10. The aircraft can include multiple engines, such as a gas turbine engine 12. The aircraft further includes a fuselage 14, a cockpit 16 positioned in the fuselage 14, and wing assemblies 18 extending outward from the fuselage 14. A heat exchanger 20 can be provided in any suitable location in the aircraft 10. For example, the heat exchanger 20 can be provided in an engine component of the gas turbine engine 12 for cooling of the engine component. Systems in the aircraft 10 can include the heat exchanger 20 as well. By way of non-limiting example, the aircraft can include an auxiliary power unit (APU) system 22 and an avionics system 24. One or both of these systems can include the heat exchanger 20. It should be understood that any component or system in the aircraft 10 requiring the transfer of heat from one medium to another can be provided with the heat exchanger 20 described herein.

While a commercial aircraft 10 has been illustrated, it is contemplated that the heat exchanger described herein can be used in any type of aircraft 10. Further, while two gas turbine engines 12 have been illustrated on the wing assemblies 18, it will be understood that any number of gas turbine engines 12 including a single gas turbine engine 12 on the wing assemblies 18, or even a single gas turbine engine mounted onto the fuselage 14 is contemplated.

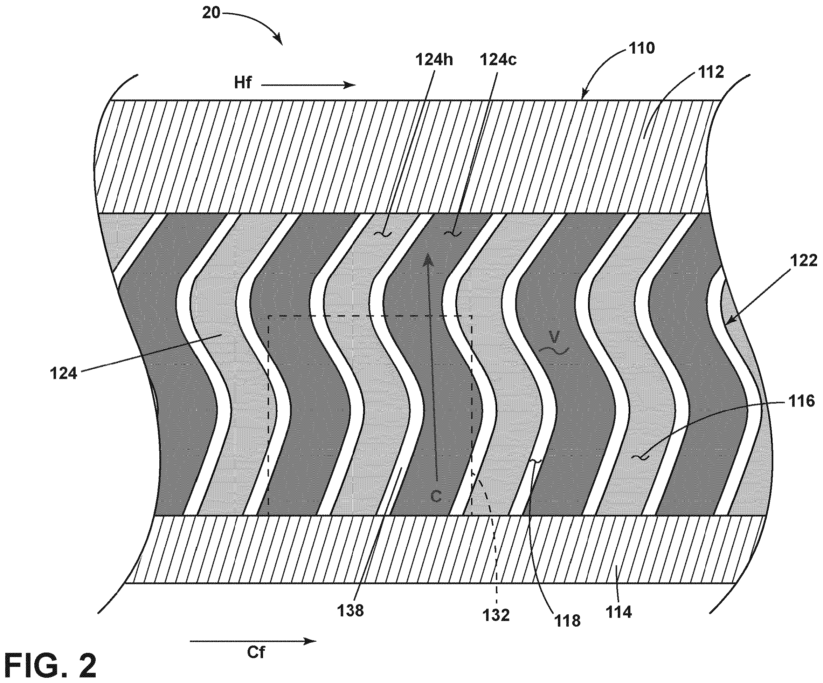

FIG. 2 is a schematic cross-section of the heat exchanger 20. The heat exchanger 20 can be bound by a substrate 110 including a first wall 112 and a second wall 114. The first wall 112 can be spaced from the second wall 114 to define a wall gap 116. The substrate 110 can be any wall of a component, including but not limited to interior walls, a tip wall, a combustion liner wall, or the encasement of the heat exchanger component itself. The first wall 112 can face a hot flow (Hf). The second wall 114 can face a cooling fluid flow (Cf). The cooling fluid flow (Cf) can be supplied from any cooling supply, by way of non-limiting example bleed air from the gas turbine engine 12. The hot flow (Hf) and the cooling fluid flow (Cf) can be gaseous, liquid, or a two-phase flow.

A cooling architecture 122 can be disposed within the substrate 110 between the first and second walls 112, 114. The cooling architecture 122 can include a set of fluidly separate cooling conduits 124 for exchanging heat between fluid flow within the conduits 124. Every other conduit 124 can define a first set of conduits 124c and a second set of conduits 124h. A relatively cooler fluid (C) can flow through the first set of conduits 124c with respect to the second set of conduits 124h. A set of walls 138 can fluidly separate the consecutive first and second set of conduits 124c, 124h.

At least one unit cell 132 illustrated with a dashed line to indicate a unit cell border 146 can define the cooling architecture 122. The at least one unit cell 132 can be multiple unit cells 132 defining an intricate network of conduits 124. The multiple unit cells 132 can be replicated within an available envelope volume (V) extending between the first wall 112 and the second wall 114 to fill up the wall gap 116 as illustrated. The amount of unit cells 132 depends on the available envelope volume (V) defined at least in part by the first wall 112 and the second wall 114.

The cooling architecture 122 can be defined by the set of walls 138 formed from a material 118 with a temperature limit. The temperature limit for the material 118 is referred to herein as a material temperature ($T_m$). The value of the material temperature ($T_m$) is a known value associated with the material 118 from which the cooling architecture 122 is formed.

Materials used to form the substrate 110 and the cooling architecture 122 can include, but are not limited to, steel, refractory metals such as titanium, or superalloys based on nickel, cobalt, or iron, and ceramic matrix composites. The substrate 110 and cooling architecture 122 can be formed by a variety of methods, including, casting, electroforming, or additive manufacturing modalities such as direct metal laser melting, in non-limiting examples. As used herein, an "additively manufactured" component will refer to a component formed by an additive manufacturing (AM) process, wherein the component is built layer-by-layer by successive deposition of material. AM is an appropriate name to describe the technologies that build 3D objects by adding layer-upon-layer of material, whether the material is plastic, ceramic, or metal. AM technologies can utilize a computer, 3D modeling software (Computer Aided Design or CAD), machine equipment, and layering material. Once a CAD model is produced, the AM equipment can read in data generated from the CAD model and lay down or add successive layers of liquid, powder, sheet material or other material, in a layer-upon-layer fashion to fabricate a 3D object. It should be understood that the term "additive manufacturing" encompasses many technologies including subsets like 3D Printing, Rapid Prototyping (RP), Direct Digital Manufacturing (DDM), layered manufacturing and additive fabrication. Non-limiting examples of additive manufacturing that can be utilized to form an additively-manufactured component include powder bed fusion, vat photopolymerization, binder jetting, material extrusion, directed energy deposition, material jetting, or sheet lamination. It is also contemplated that a process utilized could include printing a negative of the part, either by a refractory metal, ceramic, or printing a plastic, and then using that negative to cast the component.

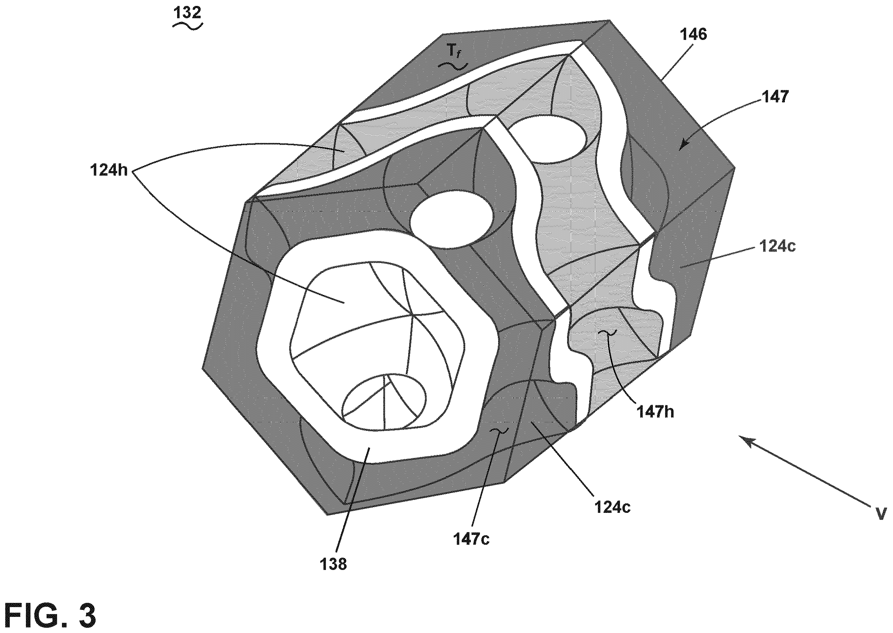

FIG. 3 is a single unit cell 132 with the unit cell border 146 added for clarity. While illustrated as a typical nut shape, or hexagonal prism, it should be understood that any repeating shape including but not limited to a pyramid, cube, triangular prims, etc., is contemplated. The first and second set of fluidly separate conduits 124c, 124h are illustrated with the first set of conduits 124c in a darker shading for clarity.

It can more clearly be seen that the first and second sets of fluidly separate conduits 124c, 124h are layered volumes 147 separated by the set of walls 138. The first set of conduits 124c (darker shade) can define a cooling layered volume 147c, whereas the second set of conduits 124h (lighter shade) can define a heated layered volume 147h. The average temperature of the fluid defining the layered volumes 147c, 147h is referred to herein as a fluid temperature ($T_f$). The value of the fluid temperature ($T_f$) is a representative snapshot of the entirety of the fluids flowing within the cooling architecture.

Turning to FIG. 4 an enlarged view of the single unit cell 132 of FIG. 4 with shading and the unit cell border 146 removed. The unit cell 132 can include the set of walls 138 separating the fluidly separate conduits 124 into the first and second set of conduits 124c, 124h. The set of walls 138 can define a wall thickness (t). For each unit cell 132, the wall thickness (t) can be constant throughout. The unit cell 132 can include varying wall thickness (t) throughout in which case the wall thickness utilized for calculations described herein would be the average wall thickness (t).

Each conduit 124 can include multiple openings 140 within. The first set of conduits 124c can include, by way of non-limiting example a first opening 140a. The second set of conduits 124h can include, by way of non-limiting example a second opening 140b.

The set of conduits 124 can define a furcated flow path 142 splitting at a junction 144. The furcated flow path 142 can be bifurcated or trifurcated as illustrated. Each of the multiple openings 140 can define a diameter ($D_H$). While illustrated with a circular shape, it should be understood that the multiple openings 140 can have any shape and that the diameter ($D_H$) is a hydraulic diameter. The diameter ($D_A$) for the first opening 140a can be equal to the diameter of the other openings. For example, the diameter ($D_A$) of the first opening 140a equals the diameter ($D_B$) of the second opening 140b which in turn equals the diameter ($D_H$) of the exemplary opening 140 and so on. It should be understood that the hydraulic diameter ($D_H$) can also vary among the multiple openings 140 in which case the hydraulic diameter ($D_H$) utilized for calculations described herein would be the average hydraulic diameters ($D_H$).

It will be shown herein that a relationship between the thickness (t) of the wall 138 of the unit cell 132, the diameter ($D_H$) of the openings 140 in the unit cell 132, the material temperature ($T_m$) and the fluid temperature ($T_f$) can be referred to herein as a unit cell performance factor, or simply "UCPF". Similarly, the thickness (t) may vary slightly and therefore the thickness (t) utilized for calculations described herein would be the average thickness (t).

Turning to FIG. 5, a view from line V in FIG. 3 is illustrated of multiple layered unit cells 132. The layered volumes 147 can more clearly be seen as separated by the set of walls 138. The first set of conduits 124c (darker shade) can define the cooling layered volume 147c, whereas the second set of conduits 124h (lighter shade) can define the heated layered volume 147h.

FIG. 6 illustrates the heated layered volume 147h with the set of walls 138 and a majority of the cooling layered volume 147c removed. This more clearly illustrates the furcated flow path 142 along which a heated fluid (H) can flow. The furcated flow path 142 can be trifurcated as exemplary shown by the arrows. FIG. 6 is a representation of the heated fluid (H) flow without the structure of the unit cell 132.

FIG. 7 illustrates the cooling layered volume 147c with the set of walls 138 and a majority of the heated layered volume 147h removed. This more clearly illustrates the furcated flow path 142 along which the relatively cooler fluid (C) can flow. The furcated flow path 142 can be quad-furcated (four separate fluid paths) as exemplary shown by the arrows. It should be understood that the furcated paths as described herein can be split into more than four separate fluid paths. FIG. 7 is a representation of the relatively cooler fluid (C) flow without the structure of the unit cell 132.

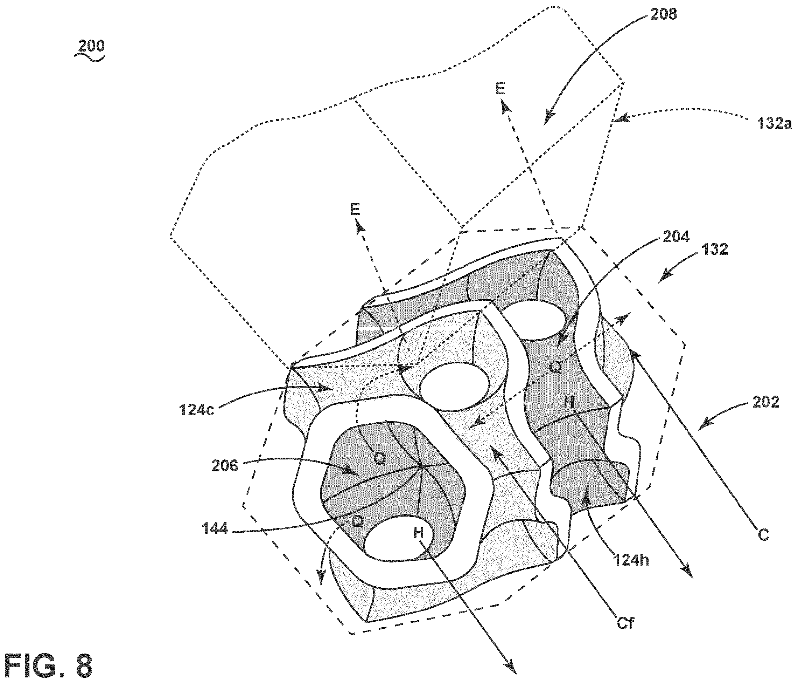

Turning to FIG. 8, a method 200 of transferring heat from one location to another within an aircraft system with the unit cell 132 according to the unit cell performance factor (UCPF) is illustrated. The method 200 can include at 202 introducing the cooling fluid (Cf) to the first set of conduits 124c. The cooling fluid (Cf) can be introduced from another unit cell 132a (in dashed line) next to the illustrated unit cell 132 or from a cooling supply conduit. Consecutive unit cells 132, 132a together can define the cooling architecture 122 (FIG. 2). It should be understood that the multiple openings 140 fluidly connect consecutive unit cells 132, 132a to further define the fluidly separate conduits 124c, 124h. The method can include at 204 cooling the second set of cooling conduits 124h by flowing the cooling fluid (Cf) through the first set of cooling conduits 124c. The cooling fluid (Cf) is the relatively cooler fluid (C) with respect to the heated fluid (H) flowing through the second set of cooling conduits 124h. Therefore heat (Q) can move from the heated fluid (H) to the cooling fluid (Cf). It should be understood that both fluids can be a cooling fluid flow (Cf) at any location within the cooling architecture 122 (FIG. 2) depending on the relative temperatures in the surrounding environment. For example, the fluid flowing in the second set of cooling conduits 124h, once cooled by fluid in the first set of cooling conduits 124c, may subsequently be used to cool other components within the system.

At 206 the cooling fluid flow (Cf) can be split at the junction 144. At 208 exhausting the cooling fluid flow (Cf) can include exhausting the cooling fluid flow (Cf) as an exhausted fluid flow (E) into another unit cell 132a. It should be appreciated that in the event the exhausted fluid (E) is introduced to another unit cell 132a, the method can repeat itself where the exhausted fluid (E) is now the heated fluid (H) for the proximate unit cell 132a.

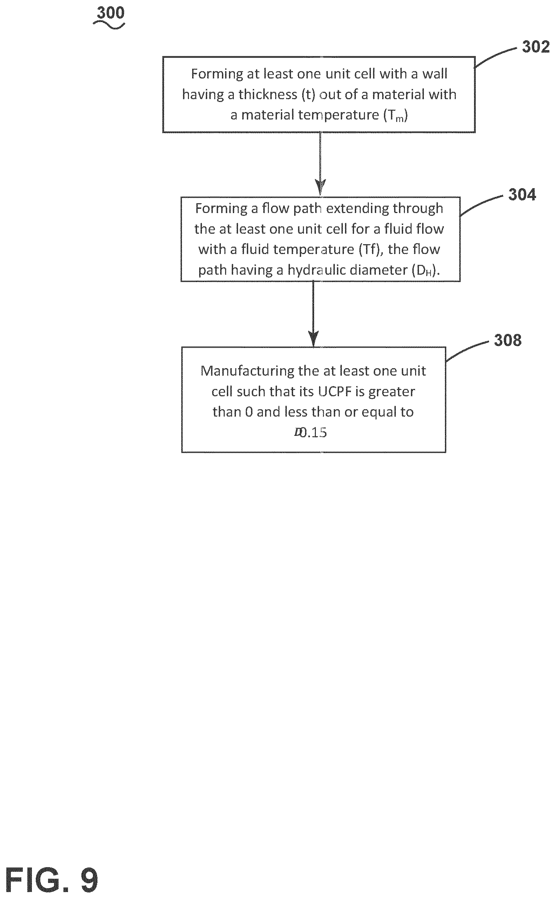

FIG. 9 is a flow chart illustrating a method 300 of forming the heat exchanger 20 with the cooling architecture 122 described herein. The method 300 can include at block 302 forming the at least one unit cell 132 with the wall 138 having a thickness (t) out of a material with a material temperature ($T_m$). At block 304 forming a flow path extending through the at least one unit cell 132 for a fluid flow, i.e. the cooling fluid (Cf) and/or the heated fluid (H), where the fluid has a fluid temperature (Tf) and the flow path has the hydraulic diameter ($D_H$). It is contemplated that the flow path is the furcated flow path 142 as described herein. At block 308, the at least one unit cell is manufactured to have a unit cell performance factor (UCPF) between 0 and 0.15. The UCPF is expressed as :

$$\frac{T_f}{T_m} \cdot \frac{t \cdot D_H^{\frac{2}{3}}(D_H + t)}{(D_H + 2t)^{8/3}}.$$

As will be further discussed herein, the UCPF considers heat transfer and pressure drop by relating a temperature ratio (left side of the UCPF equation) to a geometry-based performance factor (right side of the UCPF equation). The higher the temperature ratio, the higher the fluid temperatures are becoming relative to the material limit. A higher temperature ratio yields a higher performance. In other words, when components in a system or in the engine can run hotter, the overall efficiency of the system, engine, or both the system and the engine increases.

It has been found that the geometry-based performance factor (GPF) has a hydraulic diameter ($D_H$) that falls within an optimal range for any given wall thickness (t). Likewise, the geometry-based performance factor (GPF) has a thickness (t) that falls within an optimal range for any given hydraulic diameter ($D_H$). In other words, for a given wall thickness (t), there exists an optimal range of hydraulic diameters ($D_H$) that will balance the need for maximum heat transfer at minimum pressure drop. At hydraulic diameters ($D_H$) lower than this range, pressure drop becomes excessive. At hydraulic diameters ($D_H$) above this range, the ability to optimize heat transfer by packing the maximum number of unit cells into a given volume is reduced.

It will be appreciated that the number, size, and configuration of the unit cells, etc. are provided by way of example only and that in other exemplary embodiments, the unit cells may have any other suitable configuration.

Optimizing the geometry of the cooling architecture 122 increases the performance of the heat exchanger 20 within the systems and/or engine as described herein. This is beneficial for optimal heat transfer whilst maintaining a low pressure drop. It has been found that the optimal geometry of each unit cell 132 lies within a specific range based on the diameter ($D_H$) of the openings 140 and the thickness (t) of the set of walls 138. Finding the optimal balance could only previously be completed through trial and error, if at all. This can be a labor and time intensive process because the process is iterative and involves the selection of multiple unit cells 132 with various diameters ($D_H$) and thicknesses (t). Aircraft and other exemplary systems are designed to operate over a range of conditions, and it is advantageous to have a method of designing a heat exchanger with a selected unit cell 132 which avoids multiple component or system redesigns when requirements at a particular operating point are not met. This optimal geometry, defined through the UCPF, will enable improved unit cell performance for specified operating conditions. Moreover, utilization of the UCPF can aid the heat exchanger design process by identifying an optimal range of unit cell sizes early in the design process.

The inventors discovered during the time-consuming iterative process alluded to above, a relationship between the thickness (t) of the wall 138 of the unit cell 132 and the diameter ($D_H$) of the openings 140 in the unit cell 132. The unit cells 132 described herein enable highly compact and efficient heat exchangers due to the large amount of heat transfer surface area that can be fit within a given volume. The furcated flow path 142 allows for superior heat transfer performance with very low pressure drop penalty compared to known heat exchangers. Referred to herein as the unit cell performance factor, or simply "UCPF", this relationship was an unexpected discovery during the course of a heat exchanger design - i.e., designing heat exchangers for aircraft and other systems and evaluating the impact that the cooling architecture would have on the heat transfer and pressure drop.

The ratio (TR) of fluid temperature ($T_f$) to material temperature ($T_m$) is represented as:

$$TR = \frac{T_f}{T_m} \ (1)$$

The optimal TR falls between 5% and 125%, and more narrowly between 5% and 90%. A higher TR equates with a more efficient engine component.

Additionally, it was found that the geometry of the unit cell can be represented by the geometry-based performance factor (GPF) expressed as:

$$GPF = \frac{t \cdot D_H^{\frac{2}{3}}(D_H + t)}{(D_H + 2t)^{8/3}} \qquad (2)$$

Generally, a GPF value of between 0 and 0.12 is associated with an optimal geometry. More specifically, it has been found that an GPF value of between 0.01 and 0.12 provides a desirable pressure drop. An optimal GPF value is equal to 0.11.

The UCPF is a combination of the TR and GPF factors:

$$UCPF = \frac{T_f}{T_m} \cdot \frac{t \cdot D_H^{\frac{2}{3}}(D_H + t)}{(D_H + 2t)^{8/3}} \quad (3)$$

In other words a UCPF of 0.1375 equates with a high TR value (125%) and an optimal GPF value (0.11).

Utilizing this relationship, the inventors were able to arrive at a better performing heat exchanger in terms of heat transfer effectiveness with an acceptable pressure drop. The inventors found that the UCPF for a set of unit cells defining a cooling architecture in an engine component that meets both the heat transfer requirements and pressure drop requirements could be narrowed to a UCPF range of between 0.000245 and 0.15 ($0.000245 \leq UCPF \leq 0.15$). In some implementations described herein the UCPF value is greater than or equal to 0.000776 and less than or equal to 0.11 ($0.000776 \leq UCPF \leq 0.11$). Narrowing the UCPF range provides more insight to the requirements for a given engine well before specific technologies, integration and system requirements are developed fully. Further, knowing a range for the UCPF can prevent or minimize late-stage redesign, decrease material cost, and save time.

The UCPF value represents a combined impact of heat transfer and pressure drop. A high heat transfer and/or low pressure drop will both/each contribute to higher values of the UCPF. Narrowing the UCPF range enables assessment during the design phase regarding trade-off impacts of accepting higher amounts of pressure drop in return for more amounts of heat transfer and vice versa. The UCPF range relates the combined impact of heat transfer and pressure drop so that a designer can understand the trade-offs involved in sizing a unit cell for a particular set of conditions, which can enable a designer to produce a superior airfoil than what was previously known.

Generally, as both the hydraulic diameter and the thickness increase, so does the GPF. Likewise, as the TR increases, so does the UCPF. Keeping a thickness at a minimum while increasing the hydraulic diameter (DH) minimizes material usage. A decrease in weight along with an increase in performance enables a superior performing heat exchanger and in turn a more efficient system and/or engine.

Factoring in the TR value enables a narrowing of optimal engine performance dependent on materials chosen. For example, heat exchangers made with high temperature alloys can operate at temperatures up to 1652°F to 1751°F (900°C - 955°C). Ceramic materials can withstand temperatures up to 2500°F (1371°C). Refractory alloys can reach close to 3002°F (1650°C). These temperatures are used as the material reference temperature $T_m$ in Equation 1. The fluid temperature $T_f$ can range from 5% to 100% of the temperature limit of any given material. For example, the TR value can be determined for an engine component made of a ceramic material that has a material reference temperature $T_m$ of 1360°C (Tm = 1360) for a hot section of the engine in which the fluid temperature $T_f$ is approximately 90% of the material reference temperature $T_m$ ($T_f$ = 1224). The TR value is therefore 0.90 or 90%. The higher the TR value, all other things constant, the higher the UCPF value which equates with a higher operating limit of the heat exchanger formed from the unit cells 132.

When both thickness (t) and hydraulic diameter ($D_H$) increase together, the GPF approaches the upper limit of 0.12. At approximately t=5mm, however, the GPF begins to decrease as thickness continues to increase. This upper bound of both thickness and GPF illustrate a maximum weight. Likewise higher (DH) with lower thicknesses equate with decreasing GPF values. This lower bound of both thickness and GPF illustrate a minimum structural integrity. In other words, the closer the GPF is to the upper limit of 0.12, all other things constant, the higher the UCPF value which equates with a more compact the heat exchanger (more heat transfer area per volume).

Therefore, generally as the UCPF value reaches the upper limit of 0.15, the heat exchanger is becoming either more compact and/or able to operate at higher operating limits. The UCPF enables a balancing of these two optimal performance factors.

For example, as illustrated in TABLE I below, a unit cell 132 having a relatively large thickness (t = 5mm) combined with a relatively small diameter ($D_H$ = 0.2 mm) equates with a small GPF (GPF = 0.02), which is undesirable. This combination yields a UCPF value of .026. A designer may want to drop weight while increasing efficiency and can do so by simply decreasing the thickness to (t = 0.1 mm) yielding a UCPF of 0.146 while all other factors remain the same. Therefore, a designer can quickly narrow down desirable geometries simply by changing one factor, increasing the UCPF to the maximum of 0.15, and keeping all other variables constant.

TABLE 1

| Thickness (mm) | Diameter (mm) | GPF | TR (%) | UCPF |
|---|---|---|---|---|
| 0.1 | 0.25 | 0.117 | 125 | 0.146 |
| 5 | 0.25 | 0.02 | 125 | 0.026 |

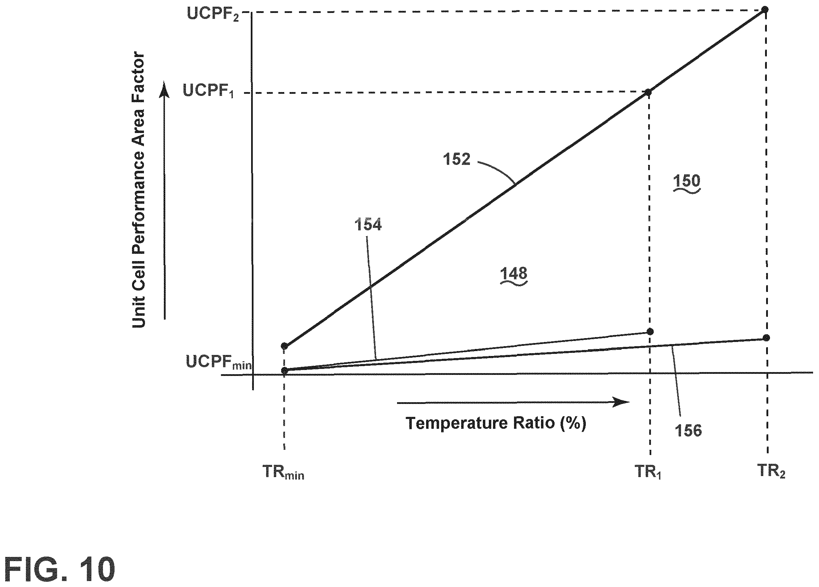

Turning to FIG. 10, a graph of the UCPF represented along the y-axis and the Temperature Ratio (TR) represented along the x-axis is illustrated. It has been found that a small bounded region 148 and a large bounded region 150 best represents the desired balance described herein, each range dependent on the heat exchanger in which the unit cell 132 described herein is located.

An upper bounding line 152 has a slope representing a maximum GPF of 0.12 that bounds both the small and large bounded regions 148, 150. A first lower bounding line 154 has a slope representing a first minimum GPF of 0.017 that bounds the small bounded regions 148. A second lower bounding line 156 has a slope representing a second minimum GPF of 0.004 that bounds the small bounded region 148.

Both the small and large bounded regions 148, 150 are bounded by a minimum temperature ratio ($TR_{min}$) of 5%. The small bounded region 148 extends between the minimum temperature ratio ($TR_{min}$) and a first maximum temperature ratio ($TR_1$) of 90%. The large bounded region 150 extends between the minimum temperature ratio ($TR_{min}$) and a second maximum temperature ratio ($TR_2$) of 125%.

Both the small and large bounded ranges 148, 150 are bound by a minimum unit cell performance factor ($UCPF_{min}$). Two maximum unit cell performance factors are represented in the graph, a first maximum unit cell performance factor ($UCPF_1$) for the small bounded region 148 and a second maximum performance area actor ($UCPF_2$) for the large bounded region 150.

Turning to Tables II, III, and IV, various thicknesses (0.1, 1, and 2mm respectively) and diameters (0.25, 2, and 6mm respectively) result in a geometry performance factor (GPF) that varies little (GPF $\simeq$ 0.11). Combining the GPF with the temperature ratio (TR), however provides a larger range of UCPF values. The smaller the TR value (5%) the relatively cooler the system while a larger TR value (125%) equates with relatively hotter areas of the system. The resulting UCPF range of between 0 and 0.15 provides an optimal variable range for the unit cell 132 described herein regardless of engine location.

TABLE II

| Thickness (mm) | Diameter (mm) | GPF | TR (%) | UCPF |
|---|---|---|---|---|
| .1 | .25 | 0.116 | 5 | 0.0058 |
| 1 | 2 | 0.118 | 5 | 0.0059 |
| 2 | 6 | 0.114 | 5 | 0.0057 |

TABLE III

| Thickness (mm) | Diameter (mm) | GPF | TR (%) | UCPF |
|---|---|---|---|---|
| .1 | .25 | 0.116 | 80 | 0.093 |
| 1 | 2 | 0.118 | 80 | 0.094 |
| 2 | 6 | 0.114 | 80 | 0.091 |

TABLE IV

| Thickness (mm) | Diameter (mm) | GPF | TR (%) | UCPF |
|---|---|---|---|---|
| .1 | .25 | 0.116 | 125 | 0.146 |
| 1 | 2 | 0.118 | 125 | 0.148 |
| 2 | 6 | 0.114 | 125 | 0.142 |

While a UCPF of close to the upper limit of 0.15 is desirable, design constraints including, but not limited to manufacturing capability and available envelope volume (V) for heat transfer, can narrow the ranges available for the thickness (t) of the set of walls 138 and the diameter ($D_H$) associated with the unit cell 132 described herein. Utilizing the results described herein, TABLE V below lists a small range and a large range for the variables (t), ($D_H$), (TR), and (UCPF), discussed herein. The small range encompasses known state of the art thin wall manufacturing capabilities and a low-risk range of operating temperatures relative to a given material limit. The large range includes a broader range of unit cell sizes that may carry higher manufacturing risk based on known capabilities and a more aggressive operating temperature range.

TABLE V

| Variable | Small Range | Large Range |
|---|---|---|
| Thickness (t) | $0.1mm \leq t \leq 2mm$ | $0.05mm \leq t \leq 5mm$ |
| Diameter ($D_H$) | $0.75mm \leq D_H \leq 6mm$ | $0.25mm \leq D_H \leq 10mm$ |
| Temperature Ratio (TR) | $5 \leq TR \leq 90$ | $5 \leq TR \leq 125$ |
| Unit Cell Performance Factor (UCPF) | $0.000776 < UCPF \leq .11$ | $0.000245 \leq UCPF \leq .15$ |

Benefits associated with the UCPF described herein include a quick visualization of tradeoffs in terms of heat transfer and pressure drop that are bounded by the constraints imposed by the materials used, the available envelope volume (V), which is determined by the component or system enclosures and the configuration of surrounding components, or any other design constraint. The UCPF enables the manufacturing of a high performing heat exchanger with peak performance with the factors available. While narrowing these multiple factors to a region of possibilities saves time, money, and resources, the largest benefit is at the system level, where higher-efficiency heat exchangers enable improved system performance. Previously developed heat exchangers may peak in one area of performance by design, but lose efficiency or lifetime benefits in another area of performance. In other words, the unit cell performance factor enables the development and production of higher performing heat exchangers across multiple performance metrics within a given set of constraints.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include structural elements with insubstantial differences from the literal languages of the claims.

**Claims**

1.  A cooling architecture (122) for a heat exchanger (20) for a gas turbine engine, the cooling architecture (122) comprising:

    at least one unit cell (132, 132a) having a set of walls (138) with a thickness (t), the set of walls (138) defining fluidly separate conduits (124, 124c, 124h) having multiple openings (140, 140a, 140b), each of the multiple openings (140, 140a, 140b) having a hydraulic diameter ($D_H$);
    **characterized in that** the thickness (t) and the hydraulic diameter ($D_H$) relate to each other by an equation:

    $$TR \cdot \frac{D_H^{2/3}(D_H+t)}{(D_H+2t)^{8/3}}$$ to define a unit cell (132, 132a) performance factor (UCPF);

    wherein TR is greater than 0 and less than or equal to 1.25 ($0 < TR \leq 1.25$); and
    wherein the UCPF is greater than 0 and less than or equal to 0.15 ($0 < UCPF \leq 0.15$).

2.  The cooling architecture (122) of claim 1, wherein the fluidly separate conduits (124, 124c, 124h) define a furcated flow path (142).

3.  The cooling architecture (122) of any preceding claim, wherein the at least one unit cell (132, 132a) is multiple unit cells (132, 132a).

4.  The cooling architecture (122) of claim 3 wherein the multiple unit cells (132, 132a) are replicated within an envelope volume (V) to define the cooling architecture (122).

5.  The cooling architecture (122) of claim 4 wherein the multiple openings (140, 140a, 140b) fluidly connect consecutive unit cells (132, 132a) to further define the fluidly separate conduits (124, 124c, 124h).

6.  The cooling architecture (122) of any preceding claim, wherein the UCPF is greater than 0 and less than or equal to 0.11 (0 ≤ UCPF ≤ 0.11).

7.  The cooling architecture (122) of any preceding claim, wherein the thickness (t) is greater than or equal to 0.05 mm and less than or equal to 5 mm (0.05 mm ≤ t ≤ 5 mm).

8.  The cooling architecture (122) of any preceding claim, wherein the thickness (t) is greater than or equal to 0.1 mm and less than or equal to 2 mm (0.1 mm ≤ t ≤ 2 mm).

9.  The cooling architecture (122) of any preceding claim, wherein the diameter ($D_H$) is greater than or equal to 0.25 mm and less than or equal to 10 mm (0.25 mm ≤ t ≤ 10 mm).

10. The cooling architecture (122) of any preceding claim, wherein the diameter (D) is greater than or equal to 0.75 mm and less than or equal to 6 mm (0.75 mm ≤ D ≤ 6 mm).

11. The cooling architecture (122) of any preceding claim, wherein TR is greater than or equal to 0.05 and less than or equal to 0.9 (0.05 ≤ $TR$ ≤ 0.9).

12. A heat exchanger (20) for a gas turbine engine, the heat exchanger (20) comprising the cooling architecture of any preceding claim.

13. The heat exchanger of claim 1, wherein the cooling architecture (122) is disposed within a substrate (110).


**Patentansprüche**

1.  Kühlarchitektur (122) für einen Wärmetauscher (20) für ein Gasturbinentriebwerk, wobei die Kühlarchitektur (122) umfasst:

    mindestens eine Einheitszelle (132, 132a), die einen Satz Wände (138) mit einer Dicke (t) aufweist, wobei der Satz Wände (138) fluidtechnisch getrennte Leitungen (124, 124c, 124h) definiert, die mehrere Öffnungen (140, 140a, 140b) aufweisen, wobei jede der mehreren Öffnungen (140, 140a, 140b) einen hydraulischen Durchmesser ($D_H$) aufweist;
    **dadurch gekennzeichnet, dass** sich die Dicke (t) und der hydraulische Durchmesser ($D_H$) durch eine Gleichung:  $TR \cdot \dfrac{D_H^{2/3}(D_H + t)}{(D_H + 2t)^{8/3}}$  zur Definition eines Leistungsfaktors (UCPF) einer Einheitszelle (132, 132a) aufeinander beziehen;
    wobei TR größer als 0 und kleiner als oder gleich 1,25 (0 < $TR$ ≤ 1,25) ist; und
    wobei der UCPF größer als 0 und kleiner als oder gleich 0,15 (0 < UCPF ≤ 0,15) ist.

2.  Kühlarchitektur (122) nach Anspruch 1, wobei die fluidtechnisch getrennten Leitungen (124, 124c, 124h) einen gefurchten Strömungsweg (142) definieren.

3.  Kühlarchitektur (122) nach einem der vorstehenden Ansprüche, wobei es sich bei der mindestens einen Einheitszelle (132, 132a) um mehrere Einheitszellen (132, 132a) handelt.

4.  Kühlarchitektur (122) nach Anspruch 3, wobei die mehreren Einheitszellen (132, 132a) innerhalb eines Hüllvolumens (V) repliziert sind, um die Kühlarchitektur (122) zu definieren.

5.  Kühlarchitektur (122) nach Anspruch 4, wobei die mehreren Öffnungen (140, 140a, 140b) aufeinanderfolgende Einheitszellen (132, 132a) fluidtechnisch verbinden, um die fluidtechnisch getrennten Leitungen (124, 124c, 124h) weiter zu definieren.

**6.** Kühlarchitektur (122) nach einem der vorstehenden Ansprüche, wobei der UCPF größer als 0 und kleiner oder gleich 0,11 (0 ≤ UCPF ≤ 0,11) ist.

**7.** Kühlarchitektur (122) nach einem der vorstehenden Ansprüche, wobei die Dicke (t) größer als oder gleich 0,05 mm und kleiner als oder gleich 5 mm (0,05 mm ≤ t ≤ 5 mm) ist.

**8.** Kühlarchitektur (122) nach einem der vorstehenden Ansprüche, wobei die Dicke (t) größer als oder gleich 0,1 mm und kleiner als oder gleich 2 mm (0,1 mm ≤ t ≤ 2 mm) ist.

**9.** Kühlarchitektur (122) nach einem der vorstehenden Ansprüche, wobei der Durchmesser ($D_H$) größer als oder gleich 0,25 mm und kleiner als oder gleich 10 mm (0,25 mm ≤ t ≤ 10 mm) ist.

**10.** Kühlarchitektur (122) nach einem der vorstehenden Ansprüche, wobei der Durchmesser (D) größer als oder gleich 0,75 mm und kleiner als oder gleich 6 mm (0,75 mm ≤ D ≤ 6 mm) ist.

**11.** Kühlarchitektur (122) nach einem der vorstehenden Ansprüche, wobei TR größer oder gleich 0,05 und kleiner oder gleich 0,9 (0,05 ≤ *TR* ≤ 0,9) ist.

**12.** Wärmetauscher (20) für ein Gasturbinentriebwerk, wobei der Wärmetauscher (20) die Kühlarchitektur nach einem der vorstehenden Ansprüche umfasst.

**13.** Wärmetauscher nach Anspruch 1, wobei die Kühlarchitektur (122) innerhalb eines Trägers (110) angeordnet ist.

**Revendications**

**1.** Architecture de refroidissement (122) pour un échangeur de chaleur (20) pour un moteur à turbine à gaz, l'architecture de refroidissement (122) comprenant :

au moins une cellule unitaire (132, 132a) ayant un ensemble de parois (138) d'une épaisseur (t), l'ensemble de parois (138) définissant des conduits séparés de manière fluidique (124, 124c, 124h) et ayant de multiples ouvertures (140, 140a, 140b), chacune des multiples ouvertures (140, 140a, 140b) ayant un diamètre hydraulique ($D_H$) ;
**caractérisée en ce que** l'épaisseur (t) et le diamètre hydraulique ($D_H$) sont liés l'un à l'autre par une équation :

$$TR \cdot \frac{D_H^{2/3}(D_H+t)}{(D_H+2t)^{8/3}}$$ pour définir un facteur de performance de cellule unitaire (132, 132a) (UCPF) ;

dans laquelle TR est supérieur à 0 et inférieur ou égal à 1,25 (0 < *TR* ≤ 1,25) ; et
dans laquelle l'UCPF est supérieur à 0 et inférieur ou égal à 0,15 (0 < UCPF ≤ 0,15).

**2.** Architecture de refroidissement (122) selon la revendication 1, dans laquelle les conduits séparés de manière fluidique (124, 124c, 124h) définissent un chemin d'écoulement de bifurcation (142).

**3.** Architecture de refroidissement (122) selon l'une quelconque revendication précédente, dans laquelle l'au moins une cellule unitaire (132, 132a) est constituée de multiples cellules unitaires (132, 132a).

**4.** Architecture de refroidissement (122) selon la revendication 3, dans laquelle les multiples cellules unitaires (132, 132a) sont répliquées dans un volume d'enveloppe (V) pour définir l'architecture de refroidissement (122).

**5.** Architecture de refroidissement (122) selon la revendication 4, dans laquelle les multiples ouvertures (140, 140a, 140b) raccordent de manière fluidique des cellules unitaires consécutives (132, 132a) pour définir les conduits séparés de manière fluidique (124, 124c, 124h).

**6.** Architecture de refroidissement (122) selon l'une quelconque revendication précédente, dans laquelle l'UCPF est supérieur à 0 et inférieur ou égal à 0,11 (0 ≤ UCPF ≤ 0,11).

7. Architecture de refroidissement (122) selon l'une quelconque revendication précédente, dans laquelle l'épaisseur (t) est supérieure ou égale à 0,05 mm et inférieure ou égale à 5 mm (0,05 mm ≤ t ≤ 5 mm).

8. Architecture de refroidissement (122) selon l'une quelconque revendication précédente, dans laquelle l'épaisseur (t) est supérieure ou égale à 0,1 mm et inférieure ou égale à 2 mm (0,1 mm ≤ t ≤ 2 mm).

9. Architecture de refroidissement (122) selon l'une quelconque revendication précédente, dans laquelle le diamètre ($D_H$) est supérieur ou égal à 0,25 mm et inférieur ou égal à 10 mm (0,25 mm ≤ t ≤ 10 mm).

10. Architecture de refroidissement (122) selon l'une quelconque revendication précédente, dans laquelle le diamètre (D) est supérieur ou égal à 0,75 mm et inférieur ou égal à 6 mm (0,75 mm ≤ D ≤ 6 mm).

11. Architecture de refroidissement (122) selon l'une quelconque revendication précédente, dans laquelle TR est supérieur ou égal à 0,05 et inférieur ou égal à 0,9 (0,05 ≤ *TR* ≤ 0,9).

12. Échangeur de chaleur (20) pour un moteur à turbine à gaz, l'échangeur de chaleur (20) comprenant l'architecture de refroidissement selon l'une quelconque revendication précédente.

13. Échangeur de chaleur selon la revendication 1, dans lequel l'architecture de refroidissement (122) est disposée à l'intérieur d'un substrat (110).

**FIG. 1**

EP 4 257 361 B1

**FIG. 2**

**FIG. 3**

FIG. 4

**FIG. 5**

**FIG. 6**

**FIG. 7**

FIG. 8

300

Forming at least one unit cell with a wall
having a thickness (t) out of a material with
a material temperature ($T_m$) ⎯ 302

Forming a flow path extending through
the at least one unit cell for a fluid flow
with a fluid temperature (Tf), the flow
path having a hydraulic diameter ($D_H$). ⎯ 304

Manufacturing the at least one unit
cell such that its UCPF is greater
than 0 and less than or equal to
0.15 ⎯ 308

# FIG. 9

FIG. 10

**REFERENCES CITED IN THE DESCRIPTION**

**Patent documents cited in the description**

- US 2018187984 A